# EUROPÄISCHE PATENTSCHRIFT

(11) **EP 3 258 142 B1**
(45) Veröffentlichungstag und Bekanntmachung des Hinweises auf die Patenterteilung: **04.01.2023**
(21) Anmeldenummer: 17160462.2
(22) Anmeldetag: 13.03.2017
(51) Int. Cl.: F16J 3/04, F15B 15/14

(54) **LÄNGENVERÄNDERBARE SCHUTZVORRICHTUNG**
VARIABLE LENGTH PROTECTION DEVICE
DISPOSITIF DE PROTECTION À LONGUEUR VARIABLE

(30) Priorität: 16.06.2016 DE 102016210787
(43) Veröffentlichungstag der Anmeldung: 20.12.2017
(73) Patentinhaber: ContiTech Luftfedersysteme GmbH, 30165 Hannover (DE)
(72) Erfinder: Stöter, Bernd, 30880 Laatzen (DE)
(74) Vertreter: Continental Corporation

(56) Entgegenhaltungen:
- DE-B- 1 024 372
- DE-U- 1 743 436
- DE-U- 7 030 176
- FR-A1- 2 963 075
- JP-U- S5 794 756

## Beschreibung

Die Erfindung betrifft eine längenveränderbare Schutzvorrichtung eines teleskopartig längenveränderbaren Bauteils, insbesondere eines Zylinders mit einer ausfahrbaren Kolbenstange, aufweisend mindestens eine das Bauteil über eine erste Teillänge umhüllende, längenveränderbar ausgebildete erste Schutzeinrichtung.

Bekannte teleskopartig längenveränderbare Bauteile, insbesondere Zylinder mit einer ausfahrbaren Kolbenstange, werden in einer Vielzahl von industriellen und kraftfahrzeugtechnischen Bereichen eingesetzt. Derjenige Teil eines teleskopartig längenveränderbaren Bauteils, der die Längenveränderung bewirkt, ist oft periodisch wechselnd den das Bauteil umgebenden Umweltbedingungen ausgesetzt. Bei der Kolbenstange eines Zylinders zum Beispiel fährt letztere aus dem geschützten Innenbereich des Zylinders heraus, wenn der Zylinderinnendruck unter dem Kolben entsprechend erhöht wird. Ein Hydraulik- oder Pneumatikzylinder besteht aus Zylindermantel, Kolben und Kolbenstange. Während des Betriebes verfährt der Kolben axial innerhalb des Zylinders. Die mit dem Kolben fest verbundene Kolbenstange ragt dabei in unterschiedlicher Länge aus dem Zylinder heraus. In der Stirnseite des Zylinders befindet sich ein Abstreifer- und Dichtsystem, welches zum einen die Kolbenstange innerhalb des Zylinders in radialer Richtung stützt und führt, weiterhin den Zylinder nach außen mehr oder weniger gut abdichtet und beim Einfahren anhaftende Verunreinigungen von der Kolbenstange abstreift.

Solange die Umgebungsbedingungen die längenverändernde Mechanik nicht beeinflussen, sind dabei über lange Zeit keine Probleme bei der periodisch wiederholten Längenveränderung zu befürchten. Sobald aber diese Umgebungsbedingungen durch beispielsweise erhöhte Schmutz- oder Korrosionsbelastungen gekennzeichnet sind, kann dies zu einem relativ frühzeitigen Ausfall solcher längenveränderbaren Bauteile führen, falls keine besonderen Schutzmaßnahmen dagegen ergriffen werden. So muss das Abstreifer- und Dichtsystem so beschaffen sein, dass kein Fluid austreten kann und schließlich Verunreinigungen (Schmutz, Fremdpartikel, Feuchtigkeit) auf der außen befindlichen Kolbenstange abgestreift werden, damit diese zum einen nicht die Dichtung beschädigen und zum anderen nicht in den Zylinderinnenraum gelangen und das Fluid verunreinigen.

Oft besitzen die Kolbenstange keinerlei Abdeckung oder Abschirmung gegen Verschmutzung im ausgefahrenen Zustand. Bezüglich chemischer Einwirkung werden Kolbenstangen üblicherweise durch einen geeigneten Werkstoff oder mittels Korrosionsschutzbeschichtungen vor Beschädigung geschützt. In einigen Fällen werden die Kolbenstangen von Hydraulik- oder Pneumatikzylindern auch durch Manschetten vor Verschmutzung geschützt. Bei solchen Manschetten ist jedoch darauf zu achten, dass deren Innenvolumen sich beim Einfahren und Ausfahren z.B. einer Kolbenstange verändert, wodurch ein Druckaustausch mit der Umgebung erfolgen muss, dami sich die Manschetten nicht unkontrolliert verformen.

So offenbart für die Anwendung im Kraftfahrzeugbereich die DE 20 2015 106 333 U1 eine Stoßdämpferbaugruppe für ein Kraftfahrzeug mit einem Faltenbalg, bei dem der Faltenbalg mit Bereichen unterschiedlichen Durchmessern bzw. unterschiedlichen Querschnittsflächen ausgebildet ist, um die beim Einfedern und damit beim Zusammendrücken des Stoßdämpfer entstehende Druckerhöhung innerhalb des Faltenbalgs zu kompensieren.

DE 1 743 436 U offenbart eine elastische Schutzbespannung für Kolbenstangen von Stoßdämpfern, die die Oberfläche der Kolbenstange vor Verschmutzungen schützt und gleichzeitig als Anschlag dienen kann. Hierbei ist die Schutzbespannung als Schlauch oder Manschette aus einem elastischen Kunststoff bzw. Schaumstoff ausgebildet und zwischen Kolbenstangenauge und Stoßdämpfergehäuse angeordnet.

Die US 2002/0079154 A1 offenbart eine Schutzhülle für Gelenkwellen bzw. Lenkstangen eines Lenkgetriebes. Die Schutzhülle ist als Faltenbalg ausgeführt, welcher ein Ventil beinhaltet, dass Luft durchlässt, jedoch das Eintreten von Verschmutzungen verhindert.

Die DE 1 041 742 A1 offenbart eine Abdichtung von Teleskopstoßdämpfern, bei welcher zwischen dem Schutzrohr und dem Arbeitsrohr Abdichtringe aus elastischem Kunststoff angeordnet sind, die eine poröse Struktur haben, so dass die eintretende Luft gefiltert wird. Die US 2013/0014638 A1 offenbart ein Schutzsystem für den Betrieb eines Hydraulikzylinders unter Wasser, bestehend aus einem elastischen Faltenbalg mit einer Ventilklappe und einem Abstreifersystem. Dieses Schutzsystem erlaubt durch Ventilklappe und das Abstreifersystem das Eintreten von Wasser in den Innenraum des Faltenbalgs beim Ausfahren des Kolbens aus dem Hydraulikzylinder und Austreten vom Wasser beim Einfahren des Kolbens in den Hydraulikzylinder. Beim Betrieb im Meerwasser/Salzwasser ist bei diesem System daher die Kolbenstange immer noch mit korrosivem Medium umgeben.

FR 2 963 075 offenbart eine längenveränderbare Schutzvorrichtung, wobei die Schutzvorrichtung einen ersten Bereich aufweist und ein zu dem ersten Bereich in Reihe angeordneter weiterer Bereich vorgesehen ist, wobei der erste Bereich über die in einem ersten Betrieb auftretenden Längenveränderungen eines Bauteils längenveränderbar ausgebildet ist und der weitere Bereich über die in einem zweiten Betrieb auftretenden Längenveränderungen des Bauteils längenveränderbar ausgebildet ist.

Gerade beim Offshore-Betrieb sind jedoch für solche längenveränderbaren Bauteile besondere Langlebigkeit und Wartungsarmut gefragt. Ohne Abstreifer und ohne mechanische Kapselung ist ein Dauerbetrieb in Meerwasser quasi nicht möglich. Auch besteht dort beim Einsatz von Abstreifern das Restrisiko, dass nicht alle Anhaftungen auf der Kolbenstange entfernt werden und dann die empfindliche Dichtung beschädigt wird. Auch würden Korrosionsschädigungen an der Oberfläche der Kolbenstange zu Schäden an der Dichtung führen.

Bei einem Schutz mittels Faltenbalg ist außerdem die Anzahl der erforderlichen Falten entsprechend dem Gesamthub des Zylinders zu dimensionieren. Daraus resultiert eine entsprechend große Blocklänge der Bälge im zusammengefahrenen Zustand. Dies wiederrum erfordert eine entsprechend längere Kolbenstange verglichen mit einem konventionellen Hydraulik- oder Pneumatikzylinder ohne Balg-Schutzsystem. Eine um das Blockmaß verlängerte Kolbenstange hat somit eine erhöhte Knicklänge, wodurch ggf. deren Durchmesser vergrößert werden muss. Diese Betrachtungen zeigen bereits, dass die vorteilhafte Schutzfunktion mittels Faltenbalg mit hohen Folgekosten einhergehen kann. Für die Erfindung bestand also die Aufgabe, eine Schutzvorrichtung für ein längenveränderbares Bauteil vorzusehen, insbesondere eines Zylinders mit einer ausfahrbaren Kolbenstange, welche einen sicheren Schutz gewährt und eine möglichst kurze Kolbenstange ermöglicht, welche eine gute Abdichtung auch bei einem deutlich vergrößerten Hub bereitstellt ohne gleichzeitig die Kosten für das Dichtsystem zu sehr zu erhöhen und welche eine verbesserte Zuverlässigkeit, Dauerhaltbarkeit und Robustheit im Vergleich zu bisherigen Lösungen bereitstellt.

Gelöst wird diese Aufgabe durch die Merkmale des Hauptanspruchs. Weitere vorteilhafte Ausbildungen sind in den Unteransprüchen offenbart.

Dabei weist die Schutzvorrichtung eine Reihenschaltung von mehreren Schutzeinrichtungen auf, wobei mindestens eine zu der ersten Schutzeinrichtung in Reihe geschaltete bzw. in Reihe angeordnete weitere Schutzeinrichtung vorgesehen ist. Durch eine solche Reihenschaltung arbeitet das erfindungsgemäße Dicht- und Schutzsystem in mehreren Stufen, abgestimmt auf die Betriebszustände. So deckt die erste der Schutzeinrichtungen den erforderlichen Längenveränderungs-Bereich bzw. den erforderlichen Hubbereich z. B. im Normalbetrieb (Stufe 1) ab. Ist eine weitere Längenveränderung erforderlich, so können die weiteren Schutzeinrichtungen den zusätzlich erforderlichen Längenbereich überdecken.

Bei einem Zylinder mit einer ausfahrbaren Kolbenstange werden dann, wenn der Kolben in Positionen außerhalb des Normalbetriebes fährt, zusätzliche Schutzeinrichtungen die dann erforderlichen zusätzlichen Hubwege als in Reihe geschaltete Einrichtungen schützen, also für "Stufe 2" und ggf. weitere Stufen die entsprechende Schutzfunktion bereitstellen.

Die erfindungsgemäße mehrstufige längenveränderbare Schutzvorrichtung besteht darin, dass eine der weiteren Schutzeinrichtungen das Bauteil umhüllt und über eine weitere Teillänge des Bauteils längenveränderbar ausgebildet ist, also prinzipiell und funktional ebenso ausgebildet ist wie die erste Schutzeinrichtung, die das Bauteil umhüllt. Dadurch ergibt sich eine besonders sichere Abdeckung des gesamten längenveränderbaren Bauteils.

Eine weitere Ausbildung besteht darin, dass eine der weiteren Schutzeinrichtungen das Bauteil umgibt und über eine weitere Teillänge des Bauteils auf letzteres einwirkt. Insbesondere dann, wenn eine solche Schutzreinrichtung als ein einen teleskopierbaren Teil des teleskopartig längenveränderbaren Bauteils dichtend umgebender Abstreifer ausgebildet ist, vorzugsweise als ein mit einer Abstreiflippe versehener Abstreifring zur Säuberung einer Kolbenstange, lässt sich das Blockmaß des mehrstufigen Systems deutlich kürzer gestalten als das Blockmaß eines reinen Ein-Balg-Systems für den gesamten Hub. Dadurch verringert sich die Baulänge des Bauteils bzw. Zylinders. So lässt sich beispielsweise eine ständige Längenveränderung im Bereich der Stufe 1 mithilfe einer elastisch längenveränderbaren Manschette auffangen, während eine selten vorkommende Längenänderung in den Bereich der weiteren Teillänge (Stufe 2) mit einem Abstreifer ausreichend geschützt werden kann, so dass bei den seltener erfolgenden Längenänderungen bis in Stufe 2 keine Verringerung der Lebensdauer zu befürchten ist. Eine Kolbenstange im Einsatz im Offshore-Bereich käme im Normalbetrieb nicht mit Salzwasser in Berührung und würde erst bei extremen Längenveränderungen und nur gelegentlich soweit ausgefahren werden, dass der Abstreifer in Aktion tritt.

Die erfindungsgemäße Ausbildung besteht darin, dass die erste und die zweite Schutzeinrichtung als elastisch längenveränderbare Manschetten ausgebildet sind, vorzugsweise als Faltenbalg aus einem elastomeren Material, in besonders gelagerten Fällen auch als Kunststoff- oder Schaumstoffschlauch. Die beiden Ausbildungen werden in Reihe geschaltet/angeordnet.

Die erfindungsgemäße Ausbildung besteht darin, dass zwischen mindestens einer der längenveränderbar ausgebildeten Schutzeinrichtungen und dem teleskopartig längenveränderbaren Bauteil ein zum Umgebungsdruck erhöhter Druck angelegt ist, vorzugsweise ein Gasdruck. Dadurch ist sichergestellt, dass zum einen die Falten oder Wände einer umhüllenden Schutzeinrichtung stets nach außen gewölbt ausgebildet sind - bei Betrieb im Offshore-Bereich und unter Wasser würde der Druck des umgebenden Wassers die Falten oder Wände sonst ggf. nach innen eindrücken - und zum anderen ist ein sicheres Anliegen von etwa vorhandenen Endflanschen gegen die entsprechenden Anschläge gewährleistet.

Die erfindungsgemäße Ausbildung besteht darin, dass eine der Schutzeinrichtungen über die im Normalbetrieb auftretenden Längenveränderungen des Bauteils längenveränderbar ausgebildet ist und mindestens eine weitere Schutzeinrichtung über die im Extrembetrieb auftretenden Längenveränderungen des Bauteils längenveränderbar ausgebildet ist. Wie bereits oben anhand der hintereinander angeordneten Schutzeinrichtungen Faltenbalg und Abstreifer dargestellt, können diese Vorteile auch bei der Hintereinanderschaltung mehrerer Faltenbälge oder bei einer Reihenschaltung/Reihenanordnung von Faltenbälgen, Kunststoff- oder Schaumstoffschläuchen und Abstreifern in je nach Anwendungsfall beliebiger Reihung und Zusammenstellung erreicht werden.

Die erfindungsgemäße Ausbildung besteht darin, dass eine der Schutzeinrichtungen das Bauteil über einen feststehenden und einen teleskopierbaren Teil umhüllt, also größere Längenbereich des längenveränderbaren Bauteils komplett und auf einfache Weise schützt. Anhand eines Ausführungsbeispiels soll die Erfindung näher erläutert werden. Es zeigen
- Fig. 1: Ein längenveränderbares Bauteil in Form eines Hydraulikzylinders für den Off-Shore-Einsatz mit einer erfindungsgemäßen längenveränderbaren Schutzvorrichtung,
- Fig. 2-1: den Hydraulikzylinder gemäß Fig. 1 mit einem erfindungsgemäßen längenveränderbaren Schutzvorrichtung in einer ersten Stellung mit eingefahrener Kolbenstange
- Fig. 2-2: den Hydraulikzylinder gemäß Fig. 2-1 in einer zweiten Stellung mit teil-ausgefahrener Kolbenstange, entsprechend der Fig. 1,

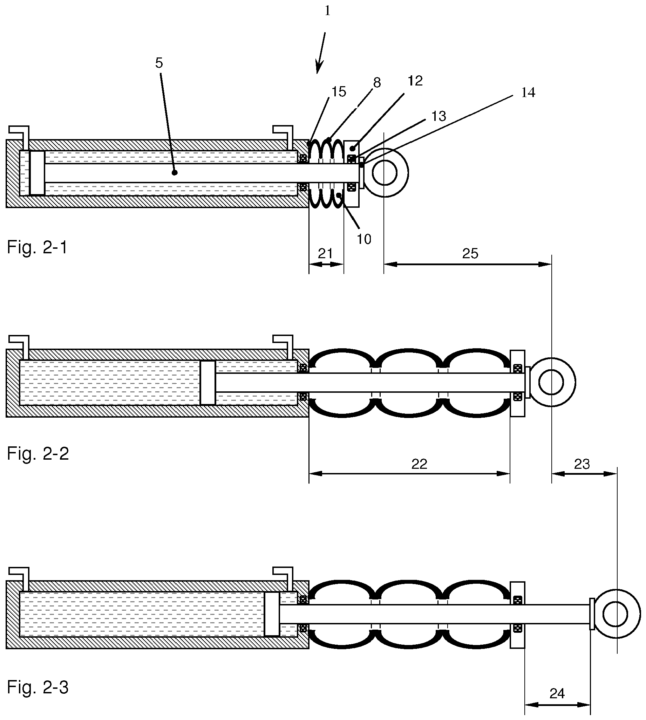

- Fig. 2-3: den Hydraulikzylinder gemäß Fig. 2-1 in einer dritten Stellung mit komplett ausgefahrener Kolbenstange,

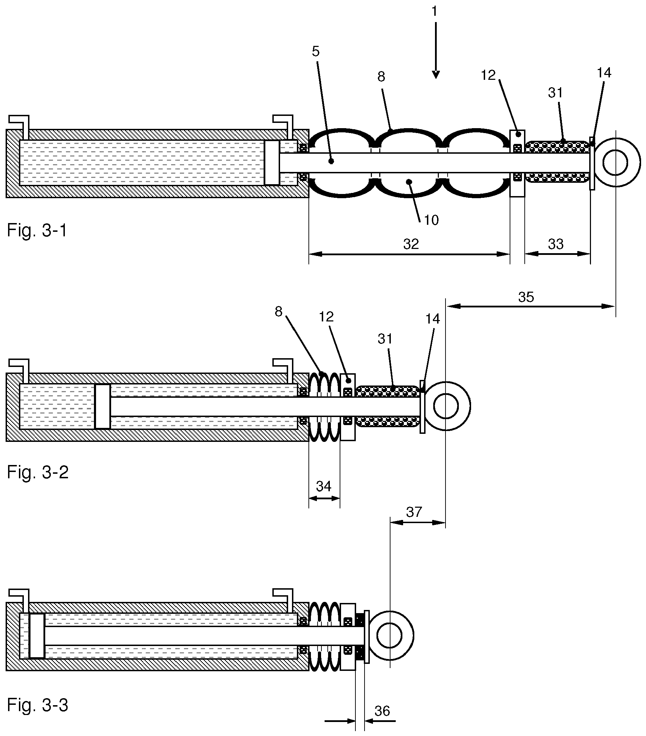

- Fig. 3-1: ein längenveränderbares Bauteil in Form eines Hydraulikzylinders mit einer weiteren Ausführung einer erfindungsgemäßen längenveränderbaren Schutzvorrichtung in einer Stellung mit komplett ausgefahrener Kolbenstange,
- Fig. 3-2: den Hydraulikzylinder gemäß Fig. 3-1 in einer Stellung mit teilweise ausgefahrener Kolbenstange,
- Fig. 3-3: den Hydraulikzylinder gemäß Fig. 3-1 in einer Stellung mit komplett eingefahrener Kolbenstange.

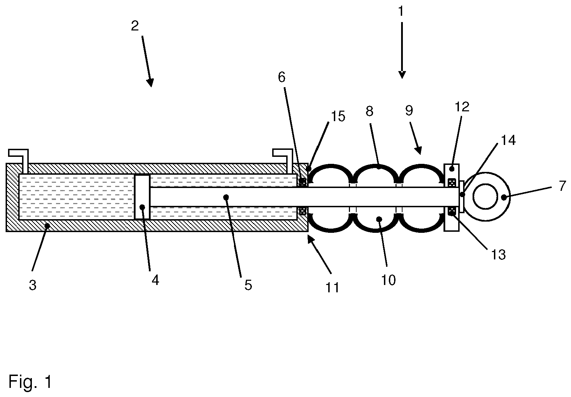

Die Fig. 1 zeigt ein als Hydraulikzylinder für den Offshore-Betrieb, hier für ein Wellenkraftwerk, ausgebildetes teleskopartig längenveränderbares Bauteil mit einer erfindungsgemäßen längenveränderbaren Schutzvorrichtung 1, nämlich mit einem Balgdicht- und Schutzsystem. Der Kolben befindet sich in mittlerer Hubposition, innerhalb des Nennhubbereiches.

Der Hydraulikzylinder 2 besteht aus Zylindermantel 3, Kolben 4 und Kolbenstange 5. Während des Betriebes verfährt der Kolben 4 axial innerhalb des Zylinders und bewegt auf diese Weise die mit dem Kolben fest verbundene Kolbenstange 5. In der Austrittsöffnung der Kolbenstange aus dem Zylinder befindet sich ein Dichtpaket 6, welches den Zylinderinnenraum druckdicht abdichtet und grundsätzlich aus einer Kombination von Führung und Dichtung besteht.

Das dem Kolben gegenüberliegende Ende der Kolbenstange ist mit einem als Auge 7 ausgebildeten Anschluss zur Kraftübertragung an eine Maschine oder Vorrichtung versehen.

Die längenveränderbare Schutzvorrichtung 1 weist eine das Bauteil über eine erste Teillänge, hier über Teile der Kolbenstange, umhüllende, längenveränderbar ausgebildete erste Schutzeinrichtung auf, nämlich einen flexiblen Faltenbalg 8 mit einer oder mehreren Falten 9. Somit ist im Innenraum 10 des flexiblen Faltenbalgs 8 ein Teilbereich der Kolbenstange 5 und damit ein Teilbereich des teleskopartig längenveränderbaren Bauteils angeordnet.

Zu dieser ersten als Faltenbalg 8 ausgebildeten Schutzeinrichtung ist eine in Reihe angeordnete weitere Schutzeinrichtung vorgesehen, nämlich ein Abstreifer- und Dichtsystem 13, das in einem Flansch 12 eingebaut ist. Das Abstreifer- und Dichtsystem 13 sorgt für eine Abdichtung des Innenraumes 10 zwischen Flansch 12 und Kolbenstange 5. Diese weitere als Abstreifer und Dichtung ausgebildete Schutzeinrichtung umgibt so das Bauteil, hier die Kolbenstange, und wirkt über eine weitere Teillänge des Bauteils auf letzteres ein, nämlich über die weitere Teillänge 24, wie sie in der Fig. 2-3 dargestellt ist.

Das zylinderseitige axiale Ende der als Faltenbalg ausgebildeten ersten Schutzeinrichtung 8 ist am korrespondierenden axialen Ende 11 des Zylinders 3 gasdicht befestigt. Das gegenüberliegende axiale Ende des Faltenbalges 8 ist am Flansch 12 gasdicht befestigt. Der Flansch 12 ist axial verschieblich auf der Kolbenstange 5 angeordnet. Vor dem Auge 7 am Ende der Kolbenstange ist ein Endanschlag 14 vorgesehen.

Der Innenraum 10 des Faltenbalgs 8 ist mit Gas gefüllt und mit einem Überdruck gegen den äußeren Umgebungsdruck beaufschlagt. Dadurch ist sichergestellt, dass zum einen die Falten 9 stets nach außen gewölbt ausgebildet sind (bei Betrieb unter Wasser würde der Druck des umgebenden Wassers die Falten sonst ggf. nach innen eindrücken) und dass zum anderen der Flansch 12 gegen den am Ende der Kolbenstange befindlichen Anschlag 14 gedrückt wird.

Fig. 2-1 zeigt einen Hydraulikzylinder mit einer erfindungsgemäßen längenveränderbaren Schutzvorrichtung 1 mit eingefahrener Kolbenstange. Der Zylinder ist in der Stellung der kleinsten Länge. Dies entspricht auch der kleinsten Länge im Normalbetrieb. Der Normalbetrieb wird im Weiteren als Stufe 1 bezeichnet. Der Flansch 12 befindet sich in der kürzesten Entfernung zur Zylinder-Stirnfläche 15. Hierbei ist die längenveränderbare Schutzvorrichtung 1, hier bestehend aus den beiden in Reihe angeordneten Schutzeinrichtungen 8 und 13, auf die Blocklänge 21 der als Faltenbalg ausgebildeten ersten Schutzeinrichtung 8 zusammengeschoben. Die Faltenbälge 8 haben sich dabei elastisch auf eine geringe axiale Erstreckung verformt und umschließen die Kolbenstange 5 zum Schutz vor äußeren Einwirkungen. Die zweite, d.h. die weitere Schutzeinrichtung, nämlich das Abstreifer- und Dichtsystem sorgt für eine Abdichtung des Innenraumes 10 zwischen Flansch 12 und Kolbenstange 5.

Fig. 2-2 zeigt einen Hydraulikzylinder mit einem erfindungsgemäßen längenveränderbaren Schutzvorrichtung 1 mit teil-ausgefahrener Kolbenstange. Der Zylinder befindet sich weiterhin in einer Stellung des Normalbetriebes (Stufe 1). Nunmehr ist die längenveränderbare Schutzvorrichtung 1, bestehend aus den beiden in Reihe angeordneten Schutzeinrichtungen 8 und 13, soweit gestreckt, dass die maximal mögliche Länge 22 der als Faltenbalg ausgebildeten ersten Schutzeinrichtung 8 erreicht ist. Der Flansch 12 liegt stirnseitig am Anschlag 14 an. Die Faltenbälge 8 haben sich so elastisch auf die maximale axiale Länge verformt und umschließen die Kolbenstange 5 komplett zum Schutz vor äußeren Einwirkungen. Die zweite, d.h. die weitere Schutzeinrichtung, nämlich das Abstreifer- und Dichtsystem 13 sorgt weiter für eine Abdichtung des Innenraumes 10 zwischen Flansch 12 und Kolbenstange 5. Der Pfeil 25 stellt den dabei erreichten Hubbereich des Zylinders im Normalbetrieb (Stufe 1) dar.

Fig. 2-3 zeigt einen Hydraulikzylinder mit einem erfindungsgemäßen längenveränderbaren Schutzvorrichtung 1 mit komplett ausgefahrener Kolbenstange. Der Zylinder ist in der Stellung des maximalen Hubweges, außerhalb des Normalbetriebes. Diese maximale bzw. im Extrembetrieb auftretende Längenveränderung wird im Weiteren als Stufe 2 bezeichnet.

Der Pfeil 23 stellt den Hubbereich des Zylinders in Stufe 2 dar. Hierbei ist - unverändert zu Fig. 2-2 - die als Faltenbalg ausgebildeten ersten Schutzeinrichtung 8 auf die maximal mögliche Länge 22 gestreckt.

Zusätzlich ist der Flansch 12 um die Länge 24 vom Anschlag 14 entfernt positioniert, indem er sich axial auf der Kolbenstange 5 verschoben hat. Diese Position von Flansch 12 ergibt sich aus der Haltekraft der Faltenbälge 8 bei maximaler Länge und der entgegen wirkenden Kraft aus dem Gasdruck im Innenraum 10. Die Faltenbälge 8 umschließen die Kolbenstange 5 nicht mehr vollständig. Auf der Länge 24 ist die Kolbenstange 5 während eines solchen zeitlich begrenzten Betriebszustands außerhalb des Normalbetriebs den Einflüssen der Umgebung ausgesetzt.

Die zweite, d.h. die weitere Schutzeinrichtung, nämlich das Abstreifer- und Dichtsystem 13 sorgt für eine Abdichtung des Innenraumes 10 zwischen Flansch 12 und Kolbenstange 5. Bewegt sich die Kolbenstange 5 zurück auf eine Position im Normalbetrieb, so bleiben die Faltenbälge 8 zunächst noch in der maximal gestreckten Länge und es verschiebt sich der nur Flansch 12 axial auf der Kolbenstange, d.h. die Kolbenstange fährt durch den Flansch zurück in den Hydraulikzylinder ein. Die Aktivierung und die Deaktivierung der Schutzeinrichtungen erfolgen also sukzessive mit fortschreitender Längenänderung, d.h. Verlängerung oder Verkürzung.

Die zweite Schutzeinrichtung, d.h. das Abstreifer- und Dichtsystem 13 wirkt nun über eine weitere Teillänge des Bauteils auf letzteres ein, nämlich über die Teillänge 24. Die zweite Schutzeinrichtung entfernt während ihrer Relativbewegung zur Kolbenstange dort anhaftende Verunreinigungen und Flüssigkeitsbenetzungen über den Bereich der Teillänge 24.

In der Fig. 3-1 bis 3-3 ist eine Ausführung dargestellt, bei der der Normalbetrieb und die im Extrembetrieb auftretende Längenveränderung anders gelagert sind; der Extrembetrieb führt in eine Minimal-Position.

Fig. 3-1 zeigt also einen Hydraulikzylinder mit einer weiteren Ausführung einer erfindungsgemäßen längenveränderbaren Schutzvorrichtung 1 mit komplett ausgefahrener Kolbenstange. Der Zylinder ist dort noch in der Stellung des maximalen Hubweges, gleichzeitig auch die Maximalposition des Normalbetriebes.

Hier ist die maximal mögliche Länge 32 der als Faltenbalg ausgebildeten ersten Schutzeinrichtung 8 erreicht, der Faltenbalg 8 ist auf seine maximal mögliche Länge 32 gestreckt. Zwischen dem Flansch 12 und dem Anschlag 14 befindet sich auf der Kolbenstange eine weitere Schutzreinrichtung 31, die als elastisch längenveränderbare Manschette in Form eines Schlauches aus geschlossen-zelligem PU-Schaum ausgebildet ist.

Diese weitere Schutzreinrichtung 31 umschließt die Kolbenstange, so dass keine Verschmutzungen und Beläge auf der Kolbenstange auftreten können. Die Position von Flansch 12 ergibt sich aus der Kraft der Faltenbälge 8 in Folge des Gasdrucks im Innenraum 10 und der entgegen wirkenden Kraft aus der elastisch längenveränderbaren weiteren Schutzreinrichtung 31 bei dessen gestreckter Länge 33, einer weiteren Teillänge des teleskopartig längenveränderbaren Bauteils. Zusammen mit der als Faltenbalg 8 ausgebildeten ersten Schutzeinrichtung ist die Kolbenstange 5 komplett umschlossen/umhüllt.

Fig. 3-2 zeigt den Hydraulikzylinder mit der erfindungsgemäßen längenveränderbaren Schutzvorrichtung 1 gemäß Fig. 3-1 mit teil-ausgefahrener Kolbenstange. Der Zylinder befindet sich jetzt in der Stellung der minimalen Länge des Normalbetriebes.

Der Faltenbalg 8 der ersten Schutzeinrichtung hat sich bereits elastisch auf die minimale axiale Länge 34, d.h. seine Blocklänge verformt. Die elastisch längenveränderbare weitere Schutzreinrichtung 31 weist nach wie vor ihre gestreckte Länge auf und überbrückt den Abstand zwischen Flansch 12 und Anschlag 14. Die Kolbenstange 5 ist durch den Faltenbalg 8 der ersten Schutzeinrichtung und die elastisch längenveränderbare weitere Schutzreinrichtung komplett gegen äußere Einwirkungen abgeschirmt. Der Pfeil 35 stellt den Hubbereich des Zylinders im Normalbetrieb dar.

Fig. 3-3 zeigt den Hydraulikzylinder mit der erfindungsgemäßen längenveränderbaren Schutzvorrichtung 1 gemäß Fig. 3-1 mit komplett eingefahrener Kolbenstange. Der Hydraulikzylinder befindet sich nun in der Stellung des minimalen Hubweges, nämlich in einer außerhalb des Normalbetriebes im Extrembetrieb auftretenden Längenveränderung.

Der Faltenbalg 8 der ersten Schutzeinrichtung ist unverändert zu Fig. 3-2 auf seine Blocklänge zusammengefahren. Die elastisch längenveränderbare weitere Schutzreinrichtung 31 ist zwischen Flansch 12 und Anschlag 14 auf ihre minimale Länge 36 gestaucht. Auch hier ist die Kolbenstange 5 durch den Faltenbalg 8 der ersten Schutzeinrichtung und die elastisch längenveränderbare weitere Schutzreinrichtung 31 komplett gegen äußere Einwirkungen abgeschirmt. Der Pfeil 37 stellt den zusätzlichen Hubbereich des Zylinders dar.

Bewegt sich die Kolbenstange 5 zurück auf eine Position im Normalbetrieb, so bleibt der Faltenbalg [8] zunächst noch in seiner Blocklänge und es streckt sich zunächst nur die elastisch längenveränderbare weitere Schutzreinrichtung 31, während sich der Flansch 12 axial auf der Kolbenstangeverschiebt.

Auch hier erfolgen die Aktivierung und die Deaktivierung der Schutzeinrichtungen sukzessive mit fortschreitender Längenveränderung der Schutzvorrichtung, d.h. sukzessive mit Verlängerung oder Verkürzung. Dies kann beispielsweise durch entsprechende Ausbildung der Elastizitäten und resultierenden Längskräften/Federkräften der Schutzeinrichtungen bei Längenveränderung erreicht werden.

Natürlich können die in den Fig. 2-1 bis Fig. 3-3 dargestellten Varianten und Funktionsweisen der längenveränderbaren Schutzeinrichtungen kombiniert werden, beispielsweise so, dass bei entsprechend längerer Kolbenstange neben der ersten Schutzeinrichtung 8 und der weiteren Schutzeinrichtung 31 auch noch eine weitere Schutzeinrichtung, nämlich das Abstreifer- und Dichtsystem 13 für eine Abdichtung des Innenraumes 10 zwischen Flansch 12 und Kolbenstange 5 sorgt, wenn die Kolbenstange weiter ausfährt, ohne dass die Schutzeinrichtung 31 zusammengeschoben wird.

Eine vergrößerte Hublänge kann auch durch Hintereinanderschaltung von Faltenbälgen erzielt werden, wobei zwischen benachbarten Faltenbälgen Führungselemente angeordnet sein können, die eine konzentrische Positionierung der Faltenbälge gegenüber der Kolbenstange sicherstellen und damit einen Schutz vor radialem Ausknicken der Faltenbälge bieten.

Bei dem hier gezeigten Anwendungsbeispiel von Hydraulikzylindern in Wellenkraftwerken wird der Gesamthub der Zylinder im Normalbetrieb nicht ausgenutzt. Eine oder beide Endpositionen werden lediglich bei außergewöhnlich hohen Wellen (z.B. bei einem Orkan oder bei Installation und Demontage angefahren.

### Bezugszeichenliste

### (Teil der Beschreibung)

- 1: Längenveränderbare Schutzvorrichtung
- 2: Hydraulikzylinder
- 3: Zylindermantel
- 4: Kolben
- 5: Kolbenstange
- 6: Dichtpaket
- 7: Auge
- 8: Erste Schutzeinrichtung / Flexibler Faltenbalg/Mehrfaltenbalg
- 9: Falte
- 10: Innenraum
- 11: Axiales Ende des Zylinders
- 12: Flansch
- 13: Weitere Schutzeinrichtung / Abstreifer- und Dichtsystem
- 14: Anschlag
- 15: Zylinder-Stirnfläche

- 21: Blocklänge
- 22: maximal mögliche Länge der ersten Schutzeinrichtung
- 23: Hubbereich des Zylinders in Stufe 2
- 24: weitere Teillänge
- 25: Hubbereich des Zylinders im Normalbetrieb - Stufe 1

- 31: elastisch längenveränderbare weitere Schutzreinrichtung
- 32: die maximal mögliche Länge der ersten Schutzeinrichtung
- 33: weitere Teillänge des teleskopartig längenveränderbaren Bauteils
- 34: minimale axiale Länge, Blocklänge
- 35: Hubbereich des Zylinders im Normalbetrieb
- 36: minimale Länge der elastisch längenveränderbaren weiteren Schutzreinrichtung 31
- 37: zusätzlicher Hubbereich des Zylinders

## Patentansprüche

1. Teleskopartig längenveränderbares Bauteil, ausgebildet als Zylinder mit einer ausfahrbaren Kolbenstange, umfassend eine längenveränderbare Schutzvorrichtung (1), wobei die Schutzvorrichtung mindestens eine das Bauteil über eine erste Teillänge umhüllende, längenveränderbar ausgebildete erste Schutzeinrichtung (8) aufweist und mindestens eine zu der ersten Schutzeinrichtung (8) in Reihe angeordnete weitere Schutzeinrichtung (13, 31) vorgesehen ist, die das Bauteil umhüllt und über eine weitere Teillänge des Bauteils längenveränderbar ausgebildet ist, wobei die erste Schutzeinrichtung (8) über die in einem Normalbetrieb auftretenden Längenveränderungen des Bauteils längenveränderbar ausgebildet ist und die weitere Schutzeinrichtung (31) über die in einem Extrembetrieb auftretenden Längenveränderungen des Bauteils längenveränderbar ausgebildet ist,
wobei die erste und die zweite Schutzeinrichtung als elastisch längenveränderbare Manschetten ausgebildet sind, **dadurch gekennzeichnet dass**, die erste und die zweite Schutzeinrichtung über einen auf der Kolbenstange verschiebbaren Flansch miteinander verbunden sind, wobei zwischen mindestens einer der längenveränderbar ausgebildeten Schutzeinrichtungen (8, 31) und dem teleskopartig längenveränderbaren Bauteil ein zum Umgebungsdruck erhöhter Druck angelegt ist

2. Teleskopartig längenveränderbares Bauteil nach Anspruch 1, bei dem eine der Schutzreinrichtungen als Faltenbalg (8) aus einem elastomeren Material ausgebildet ist.

3. Teleskopartig längenveränderbares Bauteil nach einem der Ansprüche 1 oder 2, bei dem eine der Schutzreinrichtungen als Kunststoff- oder Schaumstoffschlauch (31) ausgebildet ist.

4. Teleskopartig längenveränderbares Bauteil nach Anspruch 3, bei dem der erhöhte Druck als Gasdruck ausgebildet ist.

5. Teleskopartig längenveränderbares Bauteil nach einem der Ansprüche 1 bis 4, bei dem die Längenveränderung der Schutzeinrichtungen (8, 13, 31) jeweils sukzessive mit fortschreitender Verlängerung oder Verkürzung der Schutzvorrichtung erfolgt.

## Claims

1. Component of telescopically variable length, in the form of a cylinder having an extendable piston rod, comprising a variable-length protective apparatus (1), wherein the protective apparatus has at least one first protective device (8), in variable-length form, that envelops the component over a first partial length and there is provision for at least one further protective device (13, 31), arranged in series with the first protective device (8), that envelops the component and is in variable-length form over a further partial length of the component, wherein the first protective device (8) is in variable-length form over the variations in the length of the component that occur in a normal mode and the further protective device (31) is in variable-length form over the variations in the length of the component that occur in an extreme mode, wherein the first and the second protective device are in the form of sleeves of elastically variable length, **characterized in that** the first and the second protective device are connected to one another by way of a flange that can be moved on the piston rod, an increased pressure compared to the ambient pressure being applied between at least one of the protective devices (8, 31) in variable-length form and the component of telescopically variable length.

2. Component of telescopically variable length according to Claim 1, in which one of the protective devices is in the form of a bellows (8) made of an elastomeric material.

3. Component of telescopically variable length according to either of Claims 1 and 2, in which one of the protective devices is in the form of a plastic or foam tube (31).

4. Component of telescopically variable length according to Claim 3, in which the increased pressure is in the form of a gas pressure.

5. Component of telescopically variable length according to one of Claims 1 to 4, in which the variation in the length of each of the protective devices (8, 13, 31) takes place successively as the lengthening or shortening of the protective device progresses.

## Revendications

1. Composant à longueur variable télescopiquement, réalisé sous forme de cylindre avec une tige de piston déployable, comprenant un dispositif de protection (1) à longueur variable, le dispositif de protection présentant au moins un premier appareil de protection (8) réalisé à longueur variable, enveloppant le composant sur une première longueur partielle, et au moins un autre appareil de protection (13, 31) agencé en série du premier appareil de protection (8) étant prévu, qui enveloppe le composant et qui est réalisé à longueur variable sur une autre longueur partielle du composant, le premier appareil de protection (8) étant réalisé à longueur variable sur les variations de longueur du composant qui se produisent dans un mode de fonctionnement normal et l'autre appareil de protection (31) étant réalisé à longueur variable sur les variations de longueur du composant qui se produisent dans un mode de fonctionnement extrême,
le premier et le deuxième appareil de protection étant réalisés sous forme de manchettes à longueur variable élastiquement, **caractérisé en ce que** le premier et le deuxième appareil de protection sont reliés l'un à l'autre par l'intermédiaire d'une bride déplaçable sur la tige de piston, une pression augmentée par rapport à la pression ambiante étant appliquée entre au moins l'un des appareils de protection réalisés à longueur variable (8, 31) et le composant à longueur variable télescopiquement.

2. Composant à longueur variable télescopiquement selon la revendication 1, dans lequel l'un des appareils de protection est réalisé sous forme de soufflet (8) en un matériau élastomère.

3. Composant à longueur variable télescopiquement selon l'une quelconque des revendications 1 ou 2, dans lequel l'un des appareils de protection est réalisé sous forme de tuyau en matière plastique ou en mousse (31).

4. Composant à longueur variable télescopiquement selon la revendication 3, dans lequel la pression augmentée est réalisée sous forme de pression de gaz.

5. Composant à longueur variable télescopiquement selon l'une quelconque des revendications 1 à 4, dans lequel la variation de longueur des appareils de protection (8, 13, 31) s'effectue à chaque fois successivement au fur et à mesure de l'allongement ou du raccourcissement du dispositif de protection.
